# EUROPÄISCHE PATENTSCHRIFT

(11) **EP 0 413 178 B1**
(45) Veröffentlichungstag und Bekanntmachung des Hinweises auf die Patenterteilung: **23.03.1994**
(21) Anmeldenummer: 90114329.7
(22) Anmeldetag: 26.07.1990
(51) Int. Cl.: B01D 33/23

(54) **Vorrichtung zur mechanischen Reinigung biologisch behandelten Abwassers**
Device for mechanical purification of biologically treated waste water
Dispositif de purification mécanique d'eaux d'égout traitées biologiquement

(30) Priorität: 16.08.1989 DE 3926962
(43) Veröffentlichungstag der Anmeldung: 20.02.1991
(73) Patentinhaber: MECANA UMWELTTECHNIK AG, CH-8716 Schmerikon/SG (CH)
(72) Erfinder: Steger, Markus, CH-8730 Uznach (CH); Brauchli, Herbert, CH-8716 Schmerikon/SG (CH)
(74) Vertreter: Vièl, Georg, Dipl.-Ing.

(56) Entgegenhaltungen:
- EP-A- 0 178 584
- DE-A- 2 261 203
- FR-A- 787 265
- GB-A- 1 009 952
- US-A- 2 591 720
- US-A- 3 080 064

## Beschreibung

Die Erfindung betrifft ein Scheibenfilter zur mechanischen Reinigung biologisch behandelten Abwassers mit auf einem drehbar gelagerten, antreibbaren Tragrohr angeordneten, je zwei absaugbare Filterflächen aufweisenden Filterscheiben, wobei sich die Absaugvorrichtungen radial bis zum Tragrohr erstrecken.

Aus der DE-C-22 61 203 ist eine solche Vorrichtung bekannt. Der Aufbau dieser Vorrichtung ist verhältnismäßig kompliziert, so daß die Montage und Demontage der scheibenförmigen Filterkörper nur umständlich und zeitraubend ausgeführt werden kann.

Es sind auch die verschiedensten Filterkonstruktionen bekannt, die entweder nicht zur Reinigung von Abwasser geeignet sind oder aufwendige Konstruktionen betreffen (DE-A-en 20 02 858, 28 08 537, 22 57 357, DE-e-568 537, US-A-3.331.512, US-A-2.591.720).

Der Erfindung liegt die Aufgabe zugrunde, ein Scheibenfilter für die Reinigung von Abwasser zu schaffen, das eine einfach handzuhabende Konstruktion aufweist, bei der die Absaugung der anfallenden Absaugmenge angepaßt ist.

Diese Aufgabe wird erfindungsgemäß dadurch gelöst, daß das Tragrohr einen mehreckigen Querschnitt aufweist, daß an dessen planen Seitenflächen unmittelbar einzelne, abnehmbare mit einem Filtertuch überzogene Rahmen befestigt sind, welche zusammen einen mehreckigen Filterkörper bilden und daß die Absaugvorrichtungen Absaugstutzen aufweisen, die in mehrere jeweils anderen radialen Abschnitten des Filterkörpers zugeordnete Kammern unterteilt sind und daß die Kammern von innen nach außen im Absaugquerschnitt kleiner werdend ausgebildet sind.

Nach einer weiteren Ausbildung der Erfindung ist vorgesehen, daß ein im Querschnitt sechseckiges Tragrohr vorgesehen ist und die auf dem Tragrohr befestigten Rahmen von der Seite gesehen fünfeckig ausgebildet sind, so daß sich ein zwölfeckiger scheibenförmiger Filterkörper ergibt.

Eine andere Ausbildung der Erfindung besteht darin, daß die auf dem sechseckigen Tragrohr befestigten Rahmen von der Seite gesehen viereckig ausgebildet sind, so daß sich ein sechseckiger scheibenförmiger Filterkörper ergibt.

Gemäß einer weiteren Ausführungsform weisen die Rahmen je zwei Rohre zur Aufnahme von Bolzen für die Verschraubung von Rahmen und Tragrohr auf.

Gemäß einer weiteren Ausführungsform weisen die Rahmen am Umfang eine umlaufende, trapezförmige Einbuchtung auf, der entsprechend ausgebildete Leisten zum Befestigen des Filtertuchs zugeordnet sind.

Gemäß einer weiteren Ausführungsform weisen die Rahmen beidseitig ein gitterartiges Stützgerüst auf.

Gemäß einer weiteren Ausführungsform sind drei Kammern vorgesehen, wobei die innere Kammer den größten Absaugquerschnitt, die äußere Kammer den kleinsten Absaugquerschnitt und die mittlere Kammer einen zwischen den Absaugquerschnitten liegenden Absaugquerschnitt hat.

Gemäß einer weiteren Ausführungsform ist das Filtertuch als über die Rahmen ziehbarer Sack ausgebildet.

Die mit der Erfindung erzielten Vorteile bestehen insbesondere darin, daß ein Scheibenfilter mit großer Filterfläche geschaffen worden ist, das kostengünstig herzustellen, bequem zu montieren und gegebenenfalls zu demontieren ist. Auch ist durch die besondere Ausbildung der Absaugvorrichtungen eine optimale Absaugung und ein sehr guter Abtransport der abgesaugten Schmutzpartikel möglich.

Die Erfindung wird anhand der Zeichnungen näher beschrieben.

Es zeigen
- Fig. 1 und Fig. 2: eine Vorrichtung zur Reinigung von Abwasser nach der Erfindung in zwei Ansichten,
- Fig. 3: den Schnitt D-D aus Fig. 2,
- Fig. 4: den Schnitt E-E aus Fig. 2,
- Fig. 5: einen erfindungsgemäßen Rahmen in Seitenansicht,
- Fig. 6: den Schnitt A-A von Fig. 5,
- Fig. 7: den Schnitt B-B aus Fig. 5,
- Fig. 8: einen Absaugstutzen,
- Fig. 9: den Schnitt A-A von Fig. 8,
- Fig. 10: die Seitenansicht zu Fig. 8,
- Fig. 11: den Schnitt B-B zu Fig. 9,
- Fig. 12 und Fig. 13: die zu dem Absaugstutzen gehörende Saugplatte in zwei Ansichten,
- Fig. 14: eine andere Form des Rahmens nach der Erfindung.

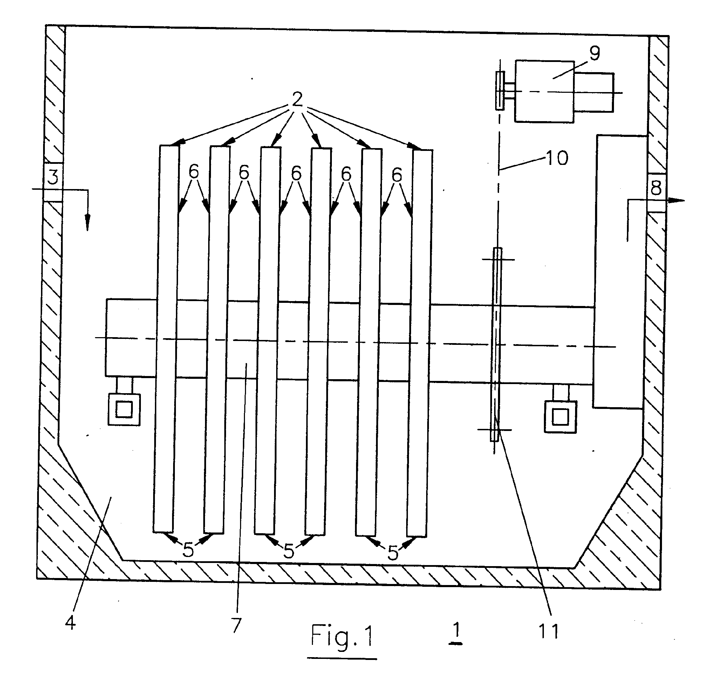

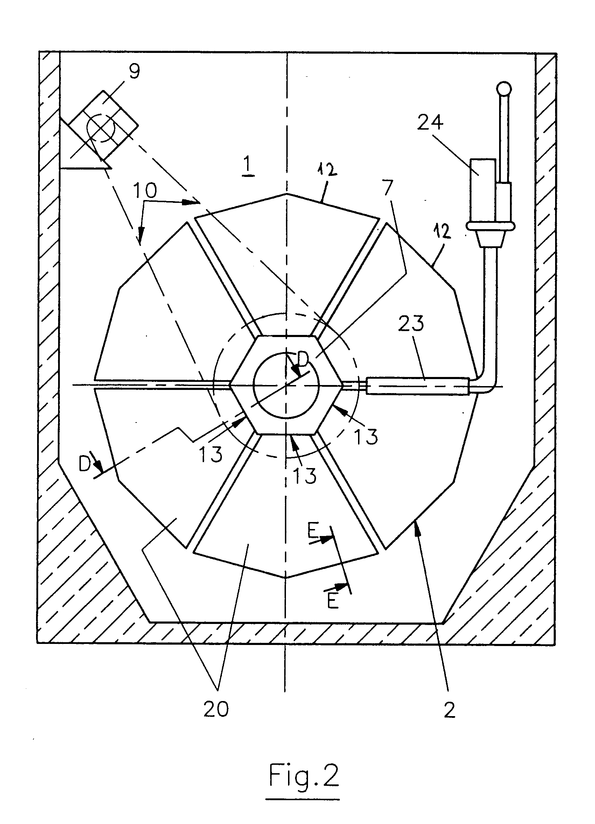

Die Fig. 1 und 2 zeigen eine Vorrichtung 1 zur mechanischen Reinigung von Abwasser, was üblicherweise biologisch behandelt (nicht dargestellt) und anschließend mit zum Beispiel einem Scheibenfilter 2 mechanisch gereinigt wird. Das vorbehandelte Abwasser gelangt über einen Zulauf 3 in das Becken 4, passiert die seitlich an den scheibenförmigen Filterkörpern 5 vorhandenen Filterflächen 6 und fließt gereinigt durch das sich drehende Tragrohr 7 und die Ableitung 8 ab. Das Scheibenfilter 2 ist als ganze Einheit drehbar ausgebildet, wozu ein Antrieb 9 beispielsweise über eine Kette 10 mit einem auf dem drehbar gelagterten Tragrohr 7 angeordneten Ritzel 11 verbunden ist.

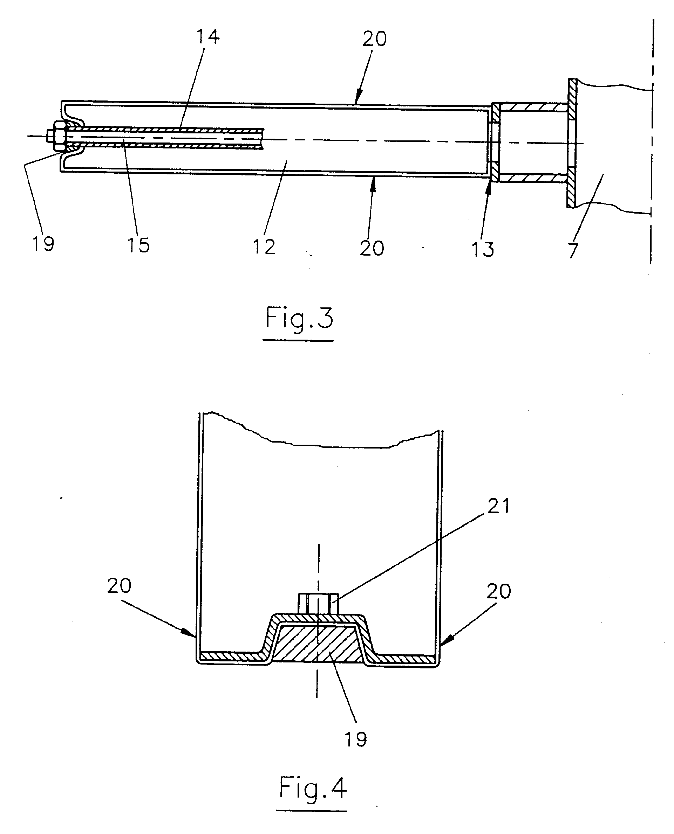

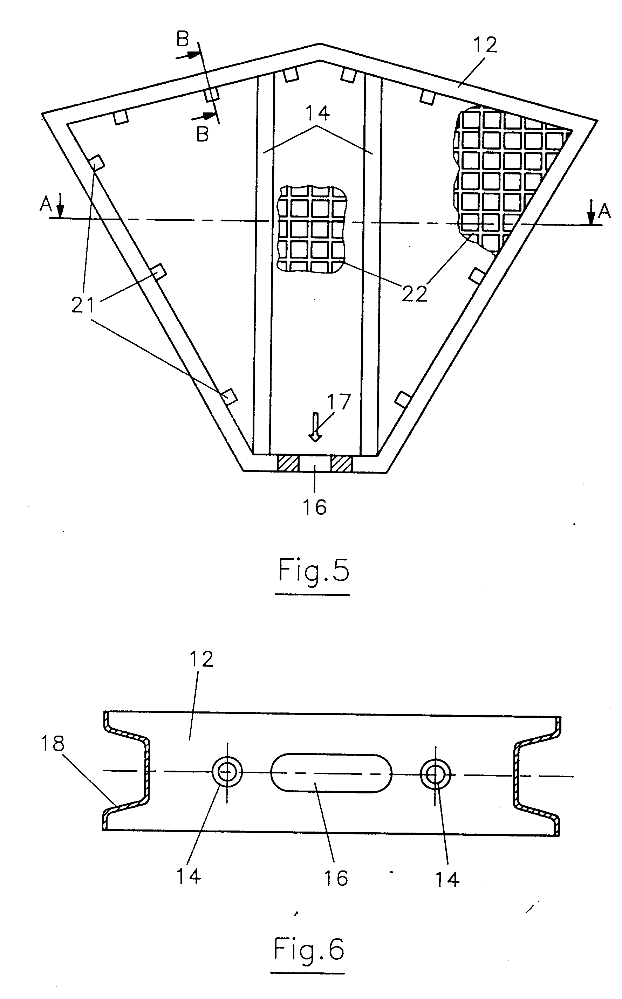

Eine Besonderheit der Erfindung besteht darin, daß einzelne abnehmbare, mit einem Filtertuch überzogene, in ihrer Gesamtheit einen scheibenförmigen Filterkörper 5 bildende Rahmen 12 vorgesehen sind, die mit dem sich drehenden Tragrohr fest verbunden sind. Das Tragrohr 7 kann im Prinzip jeglichen Querschnitt haben, vorzugsweise ist es aber im Querschnitt mehreckig ausgeführt, wie das beispielsweise Fig. 2 zeigt. In diesem Beispiel ist das Tragrohr 7 sechseckig und hat plane Seitenflächen 13. An diesen Seitenflächen 13 sind sechs abnehmbare, mit einem Filtertuch überzogene, in ihrer Gesamtheit einen mehreckigen, scheibenförmigen Filterkörper 5 bildende Rahmen 12 befestigt. Einzelheiten zur Befestigung der Rahmen 12 auf dem Tragrohr 7 zeigt die Fig. 3: In pro Rahmen 12 zwei Rohren 14 sind Bolzen 15 vorgesehen, mit deren Hilfe die Rahmen 12 mit dem Tragrohr 7 verschraubt sind. Einzelheiten eines Rahmens 12 sind in den Fig. 5, 6 und 7 dargestellt. Der in diesem Fall fünfeckige Rahmen 12 weist die besagten zwei Rohre 14 zur Aufnahme der Bolzen 15 auf. Im unteren Bereich hat der Rahmen eine Öffnung 16, über die in Richtung des Pfeiles 17 das gereinigte Abwasser in das Tragrohr 7 eintreten kann. Der Rahmen 12 hat am Umfang eine umlaufende, trapezförmige Einbuchtung 18, der entsprechend ausgebildete Leisten 19 zum Befestigen des Filtertuchs 20 zugeordnet sind.

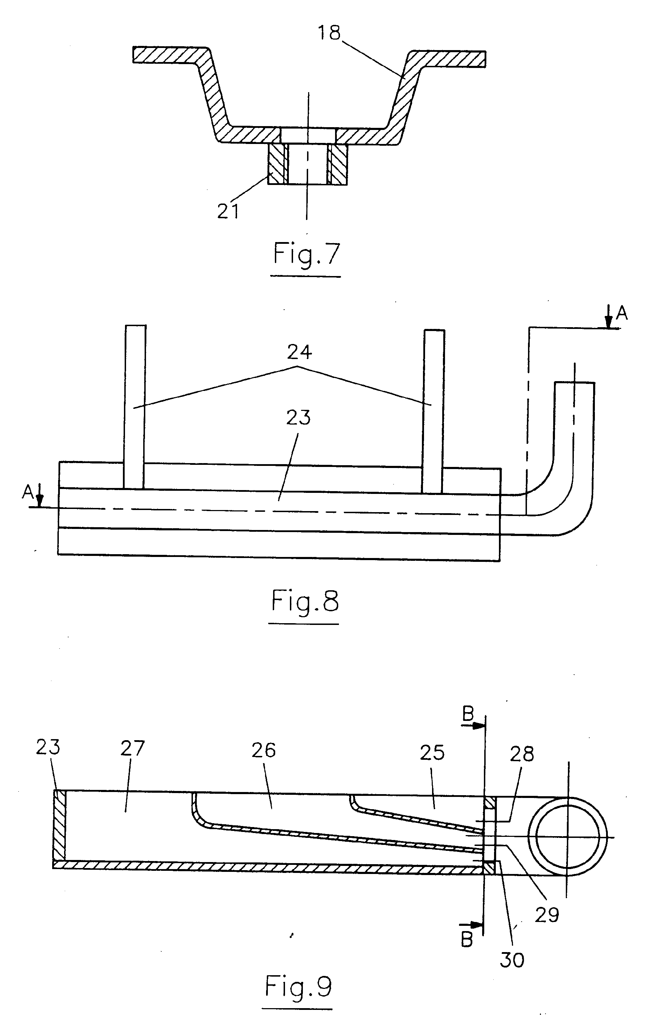

Vergleiche dazu die Fig. 3 bis 7. Das Filtertuch 20 ist vorzugsweise als über die Rahmen 12 ziehbarer Sack ausgebildet und wird mit den Leisten 19 und den Gewindebuchsen 21 zugeordneten Schrauben (nicht dargestellt) an dem Rahmen 12 befestigt (Fig. 7).

An den Rahmen 12 können auf jeder Seite gitterartige Stützgerüste 22 angeordnet sein, wie das in Fig. 5 angedeutet ist. Diese Maßnahem hat den Zweck, das Filtertuch 20 optimal aufgespannt zu halten, um einen hohen Reinigungseffekt zu erzielen.

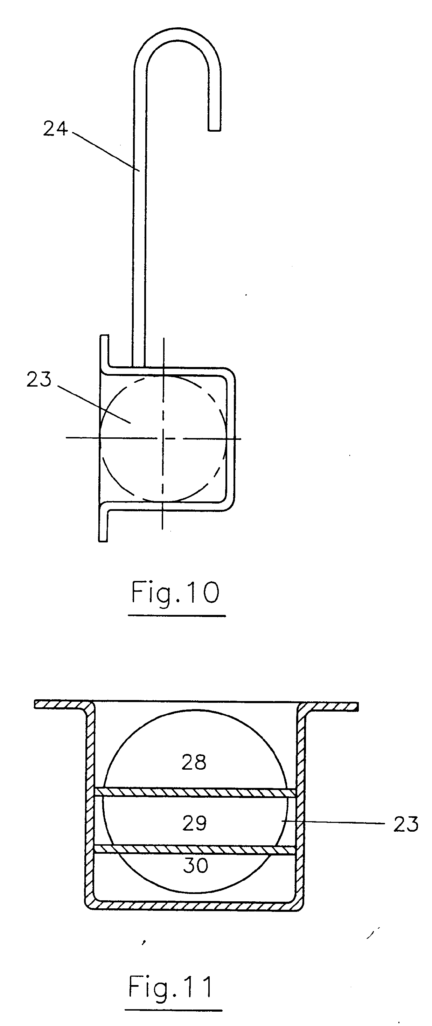

In den Fig. 8 bis 11 ist in verschiedenen Ansichten ein Absaugstutzen 23 dargestellt, der Teil einer Absaugvorrichtung 24 ist (Fig.1, 2). Der Absaugstutzen 23 gemäß der Erfindung zeichnet sich dadurch aus, daß mehrere Kammern 25, 26 und 27 vorhanden sind. Aufgrund der unterschiedlichen Umfangsgeschwindigkeit an dem Filterkörper 5 bzw. den Filterflächen 6 ist die innere Kammer 25 des Absaugstutzens 23 so ausgebildet, daß sie im Absaugquerschnitt 28 größer als die Absaugquerschnitte 29 und 30 der Kammern 26 und 27 ist. Das heißt, je nach anfallender Menge abzusaugender Teilchen ist der Absaugquerschnitt 28, 29 bzw. 30 von innen nach außen kleiner werdend ausgebildet. Vergleiche dazu insbesondere die Fig. 9 und 11.

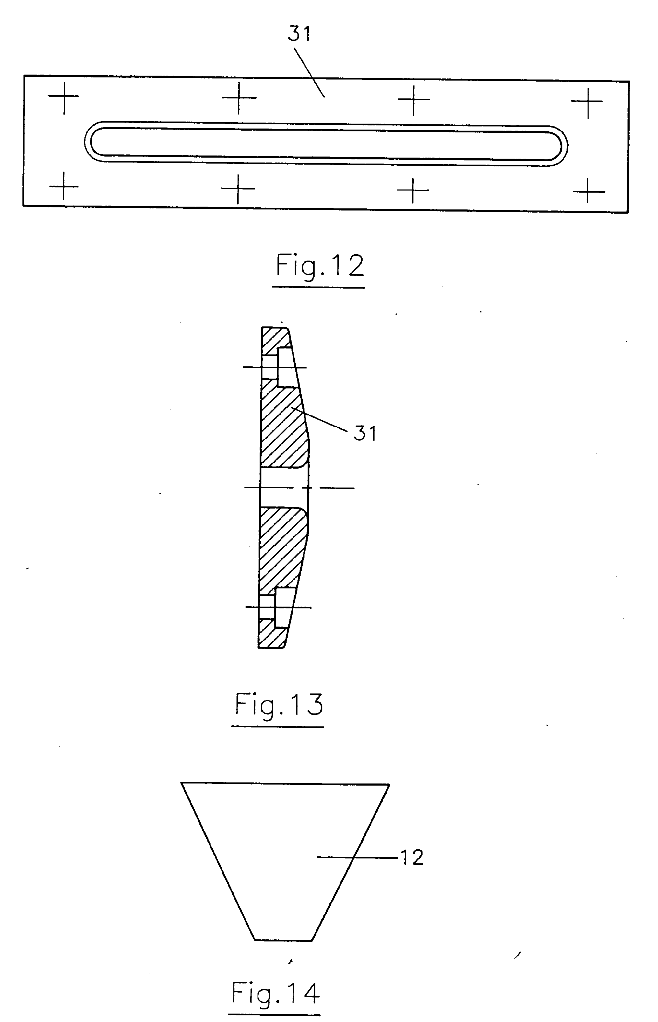

Die zwischen Absaugstutzen und Filtertuch angeordnete Saugplatte 31 ist in den Fig. 12 und 13 in zwei Ansichten dargestellt.

Fig. 14 zeigt schematisch, daß die Rahmen 12 von der Seite gesehen viereckig ausgebildet sein können, so daß sich für ein im Querschnitt sechseckiges Tragrohr ein sechseckiger scheibenförmiger Filterkörper 5 ergibt.

## Patentansprüche

1. Scheibenfilter (1) zur mechanischen Reinigung biologisch behandelten Abwassers mit auf einem drehbar gelagerten, antreibbaren Tragrohr (7) angeordneten, je zwei absaugbare Filterflächen (6) aufweisenden Filterscheiben, wobei sich die Absaugvorrichtungen (24) radial bis zum Tragrohr (7) erstrecken, **dadurch gekennzeichnet,** daß das Tragrohr (7) einen mehreckigen Querschnitt aufweist, daß an dessen planen Seitenflächen (13) unmittelbar einzelne, abnehmbare mit einem Filtertuch überzogene Rahmen (12) befestigt sind, welche zusammen einen mehreckigen Filterkörper (5) bilden und daß die Absaugvorrichtungen (24) Absaugstutzen (23) aufweisen, die in mehrere jeweils anderen radialen Abschnitten des Filterkörpers (5) zugeordnete Kammern (25, 26, 27) unterteilt sind und daß die Kammern (25, 26, 27) von innen nach außen im Absaugquerschnitt (28, 29, 30) kleiner werdend ausgebildet sind.

2. Vorrichtung nach Anspruch 1, dadurch **gekennzeichnet,** daß ein im Querschnitt sechseckiges Tragrohr (7) vorgesehen ist und die auf dem Tragrohr (7) befestigten Rahmen (12) von der Seite gesehen fünfeckig ausgebildet sind, so daß sich ein zwölfeckiger scheibenförmiger Filterkörper (5) ergibt.

3. Vorrichtung nach Anspruch 1, dadurch **gekennzeichnet**, daß ein im Querschnitt sechseckiges Tragrohr (7) vorgesehen ist und die auf dem Tragrohr (7) befestigten Rahmen (12) von der Seite gesehen viereckig ausgebildet sind, so daß sich ein sechseckiger scheibenförmiger Filterkörper (5) ergibt.

4. Vorrichtung nach einem oder mehreren der vorhergehenden Ansprüche, dadurch **gekennzeichnet,** daß die Rahmen (12) je zwei radial verlaufende Rohre (14) zur Aufnahme von Bolzen (15) für die Verschraubung von Rahmen (12) und Tragrohr (7) aufweisen.

5. Vorrichtung nach einem oder mehreren der vorhergehenden Ansprüche, dadurch **gekennzeichnet**, daß die Rahmen (12) am Umfang eine umlaufende trapezförmige Einbuchtung (18) aufweisen, der entsprechend ausgebildete Leisten (19) zum Befestigen des Filtertuchs (20) zugeordnet sind.

6. Vorrichtung nach einem oder mehreren der vorhergehenden Ansprüche, dadurch **gekennzeichnet,** daß die Rahmen (12) beidseitig ein gitterartiges Stützgerüst (22) aufweisen.

7. Vorrichtung nach Anspruch 1, dadurch **gekennzeichnet,** daß drei Kammern (25, 26, 27) vorgesehen sind.

8. Vorrichtung nach einem oder mehreren der vorhergehenden Ansprüche, dadurch **gekennzeichnet,** daß das Filtertuch (20) als über die Rahmen (12) ziehbarer Sack ausgebildet ist.

## Claims

1. Disc filter (1) for mechanical purification of biologically treated waste water having filter discs, arranged on a rotatably mounted, drivable support tube (7) and each having two filter surfaces (6) which can be cleaned by suction, the suction apparatuses (24) extending radially up to the support tube (7), characterized in that the support tube (7) has a polygonal cross-section, in that on the planar side surfaces (13) thereof are directly attached individual detachable frames (12) covered by a filter cloth, which together form a polygonal filter body (5) and in that the suction apparatuses (24) have suction nozzles (23) which are subdivided into a plurality of chambers (25, 26, 27), each assigned to different radial sections of the filter body (5), and in that the chambers (25, 26, 27) are constructed decreasing in suction cross-section (28, 29, 30) from the inside towards the outside.

2. Apparatus according to Claim 1, characterized in that a support tube (7), hexagonal in cross-section, is provided and the frames (12) attached to the support tube (7) are constructed pentagonally seen from the side, so that a dodecagonal disc-shaped filter body (5) results.

3. Apparatus according to Claim 1, characterized in that a support tube (7) hexagonal in cross-section is provided and the frames (12) attached to the support tube (7) are rectangularly constructed seen from the side, so that a hexagonal disc-shaped filter body (5) results.

4. Apparatus according to one or more of the preceding claims, characterized in that the frames (12) each have two radially running tubes (14) for receiving bolts (15) for bolting frames (12) and support tube (7).

5. Apparatus according to one or more of the preceding claims, characterized in that the frames (12) have at the periphery a surrounding trapezoidal recess (18), to which are assigned appropriately configured strips (19) for attaching the filter cloth (20).

6. Apparatus according to one or more of the preceding claims, characterized in that the frames (12) have a grid-like support framework (22) on both sides.

7. Apparatus according to Claim 1, characterized in that three chambers (25, 26, 27) are provided.

8. Apparatus according to one or more of the preceding claims, characterized in that the filter cloth (20) is configured as a bag which can be pulled over the frames (12).

## Revendications

1. Filtre à disques (1) pour l'épuration mécanique d'eaux résiduaires traitées biologiquement, comportant des disques filtrants ayant chacun deux surfaces filtrantes (6) et disposés sur un tube de support (7) monté en rotation et pouvant être entraîné, les dispositifs d'aspiration (24) s'étendant radialement jusqu'au tube de support (7), caractérisé en ce que le tube de support (7) a une section transversale polygonale, en ce que sur les faces (13) latérales planes de cette dernière sont directement fixés des cadres (12) amovibles, recouverts d'une toile filtrante, qui constituent ensemble un corps de filtration (5) polygonal, en ce que les dispositifs d'aspiration (24) comportent des tubulures d'aspiration (23) subdivisées en plusieurs chambres (25, 26, 27), lesquelles sont respectivement associées à des sections radiales différentes du corps de filtration (5), et en ce que les chambres (25, 26, 27) ont une section transversale (28, 29, 30) se rétrécissant de l'intérieur vers l'extérieur.

2. Dispositif selon la revendication 1, caractérisé en ce qu'il est prévu un tube de support (7) de section transversale hexagonale et que, vus de côté, les cadres (12) fixés sur le tube de support (7) ont la forme de pentagones, de manière à avoir un corps de filtration (5) en forme de disque dodécagonal.

3. Dispositif selon la revendication 1, caractérisé en ce qu'il est prévu un tube de support (7) de section transversale hexagonale et que, vus de côté, les cadres (12) fixés sur le tube de support (7) ont la forme de tétragones, de manière à avoir un corps de filtration (5) en forme de disque hexagonal.

4. Dispositif selon l'une quelconque ou plusieurs des revendications précédentes, caractérisé en ce que chacun des cadres (12) comporte deux tubes (14) radiaux de réception de boulons (15) destinés au boulonnage des cadres (12) sur le tube de support (7).

5. Dispositif selon l'une quelconque ou plusieurs des revendications précédentes, caractérisé en ce que les cadres (12) comportent sur le pourtour une gorge (18) faisant tout le tour et de forme trapézoïdale, à laquelle sont associées des baguettes (19) de forme correspondante pour la fixation de la toile filtrante (20).

6. Dispositif selon l'une quelconque ou plusieurs des revendications précédentes, caractérisé en ce que les cadres (12) comportent des deux côtés une charpente support (22) du type grillagé.

7. Dispositif selon la revendication 1, caractérisé en ce qu'il est prévu trois chambres (25, 26, 27).

8. Dispositif selon l'une quelconque ou plusieurs des revendications précédentes, caractérisé en ce que la toile filtrante (20) a la forme d'un sac pouvant être tendu sur les cadres (12).
